# EUROPÄISCHE PATENTSCHRIFT

(11) **EP 1 157 198 B1**
(45) Veröffentlichungstag und Bekanntmachung des Hinweises auf die Patenterteilung: **06.08.2003**
(21) Anmeldenummer: 00907611.8
(22) Anmeldetag: 23.02.2000
(51) Int. Cl.: F01N 3/28, F01N 3/20, F01N 7/18, B01J 35/04, B01D 53/88

(54) **KATALYSATORANORDNUNG MIT KATALYSATOR-TRÄGERKÖRPERN UND VORRICHTUNG SOWIE VERFAHREN ZU DEREN HERSTELLUNG**
CATALYTIC CONVERTER UNIT WITH CATALYST SUBSTRATE AND DEVICE AND METHOD FOR PRODUCING SAME
SYSTEME DE POT CATALYTIQUE MUNI DE CORPS DE SUPPORT DE POT CATALYTIQUE ET DISPOSITIF ET PROCEDE PERMETTANT DE LE PRODUIRE

(30) Priorität: 01.03.1999 DE 19908834
(43) Veröffentlichungstag der Anmeldung: 28.11.2001
(73) Patentinhaber: Emitec Gesellschaft für Emissionstechnologie mbH, 53797 Lohmar (DE)
(72) Erfinder: MAUS, Wolfgang, D-51429 Bergisch Gladbach (DE); BRÜCK, Rolf, D-51429 Bergisch Gladbach (DE)
(74) Vertreter: Kahlhöfer, Hermann, Dipl.-Phys.
(86) Internationale Anmeldenummer: EP0001488
(87) Internationale Veröffentlichungsnummer: WO00052311

(56) Entgegenhaltungen:
- EP-A- 0 318 462
- EP-A- 0 697 505
- DE-A- 19 528 963
- DE-A- 19 704 521
- GB-A- 2 250 215
- US-A- 4 969 265

## Beschreibung

Die Erfindung betrifft eine Katalysatoranordnung für Abgasanlagen von Kraftfahrzeugen mit zumindest zwei Katalysator-Trägerkörpern und eine Vorrichtung sowie ein Verfahren zur Herstellung eines insbesondere in dieser Katalysatoranordnung einzusetzenden Katalysator-Trägerkörpers.

Zur katalytischen Umsetzung von Komponenten eines Abgases einer Verbrennungskraftmaschine ist es bekannt, auf einem Katalysator-Trägerkörper wenigstens eine katalytisch wirkende Substanz aufzubringen. Katalysator-Trägerkörper sind beispielsweise aus Lagen strukturierter Bleche hergestellt, wobei die Bleche übereinander geschichtet und/oder verschlungen sind und so einen metallischen Wabenkörper mit axialen für ein Abgas durchströmbaren Gaskanälen ausbilden. Der Katalysator-Trägerkörper wird in einem Gehäuse angeordnet, welches ein Teil eines Abgassystems ist.

Insbesondere bei sogenannten Startkatalysatoren, das sind Katalysatoren, welche motornah eingebaut werden und daher sehr schnell nach dem Start des Motors auf Betriebstemperatur gelangen, ist es bekannt, Katalysator-Trägerkörper aus spiralig gewickelten abwechselnden Lagen glatter und gewellter Bleche zu verwenden. Um den Druckverlust dieser Katalysator-Trägerkörper gering zu halten, wird dabei teilweise vorgesehen, den Zentralbereich möglichst frei von Wicklungen zu halten, damit dort ein Teil der Abgase ungehindert hindurchströmen kann. Dies ist deshalb akzeptabel, weil Startkatalysatoren im allgemeinen in Verbindung mit anderen schadstoffsenkenden Maßnahmen, etwa nachgeordneten weiteren Katalysator-Trägerkörpern, betrieben werden.

Im Zusammenhang mit Startkatalysatoren besteht aufgrund des motornahen Einbaus und der dadurch auftretenden Platzprobleme die Schwierigkeit, Katalysatoranordnungen platzsparend und strömungstechnisch günstig anzuordnen. Dabei ist ferner zu berücksichtigen, daß Katalysator-Trägerkörper in solchen Katalysatoranordnungen durch direktes Anströmen von Abgas auf ihrer Vorderseite, insbesondere bei den durch den motornahen Einbau im längeren Betrieb auftretenden hohen Temperaturen des Abgasstromes, geschädigt werden können, was zu einer abnehmenden Umsetzungsrate rühren kann.

Aus der nicht vorveröffentlichten deutschen Patentanmeldung 197 55703.1 ist eine Katalysator-Trägerkörper-Anordnung fiir einen motornahen Einbau bekannt, wobei durch Anordnung eines Kragens an dem den Katalysator-Trägerkörper umgebenden Gehäuse ein Einbau zwischen einem Zylinderkopf und einem Krümmer einer Verbrennungskraftmaschine möglich ist. Die Anordnung mit einem weiteren direkt dahinter angeordneten Katalysator-Trägerkörper für die Abgasreinigung der Abgase während des Dauerbetriebs zu versehen, ist dabei im Hinblick auf die gewählte Einbauposition nicht vorgesehen und auch nicht möglich.

Aus der Druckschrift DE-GM 86 31 017.8 ist ein Katalysator-Trägerkörper, insbesondere zur Verwendung bei einer Katalysatoranordnung als Startkatalysator bekannt, welcher einen wicklungsfreien Zentralbereich aufweist und zu dessen Herstellung abwechselnde Lagen glatter und gewellter Bleche spiralig gewickelt sind, wobei die innerste Lage, die den wicklungsfreien Zentralbereich umschließt, aus fertigungstechnischen Gründen aus einem gewellten Blech besteht. Zwar ist ein solcher Katalysator-Trägerkörper prinzipiell als Startkatalysator zur Anordnung zusammen mit einem weiteren Katalysator-Trägerkörper geeignet, jedoch ergibt sich durch die zentrale Öffnung bei motomahem Einbau das Problem einer möglichen Schädigung eines nachgeordneten Katalysator-Trägerkörpers aufgrund der direkten und zentralen Anströmung des nachgeordneten Katalysator-Trägerkörpers durch den wicklungsfreien Zentralbereich hindurch. Durch die zentrale Anordnung des wicklungsfreien Bereichs wird gerade der Teil der Abgase direkt auf die Vorderseite eines eventuell nachfolgenden Katalysator-Trägerkörpers geleitet, welcher aufgrund des Strömungsprofils in der Anordnung die größte Geschwindigkeit und auch die höchste Temperatur aufweist. Dies kann, wie oben angesprochen, zur besonders raschen Schädigung eines eventuell nachgeordneten Katalysator-Trägerkörpers im Dauerbetrieb, d.h. bei hoher Temperatur des Abgasstromes, führen.

Das Dokument EP 0 697 505 A1 zeigt einen weiteren Katalysator-Trägerkörper, der einen wicklungsfreien Zentrolbereich aufweist.

Es sind Vorrichtungen und Verfahren bekannt, welche zur Herstellung eines Katalysator-Trägerkörpers aus verschlungenen Blechlagen geeignet sind. Die Druckschrift WO 97-00725 beschreibt beispielsweise eine solche Vorrichtung zum Herstellen eines Katalysator-Trägerkörpers aus wenigstens einem Stapel aus einer Vielzahl von zumindest teilweise strukturierten Blechlagen, welche eine Vielzahl von für ein Fluid durchlässigen Kanälen bilden, wobei die Vorrichtung eine um ein zentrale Achse verdrehbare an jedem Stapel angreifende gabelartige Umschlingungseinrichtung aufweist und eine Form umfaßt, welche die Umschlingungseinrichtung umgibt und deren Innenkontur der Außenkontur des herzustellenden Katalysator-Trägerkörpers entspricht. Dabei weist die Umschlingungseinrichtung wenigstens zwei Wickeldorne auf, welche mit dem oder den Stapel(n) in Eingriff bringbar sind. Durch relatives Verdrehen der Verschlingungseinrichtung gegenüber der Form werden die Stapel zu einem Wabenkörper verschlungen, welcher die Form ausfüllt. Die Ausgestaltung, zumindest eines wicklungsfreien Bereiches, wie er aufgrund der weiter oben beschriebenen strömungstechnischen Gegebenheiten bei einem Einbau eines so hergestellten Katalysator-Trägerkörpers in eine Katalysatoranordnung als Startkatalysator nötig wäre, ist mit der in der WO 97/00725 gelehrten Vorrichtung, bzw. mit dem dort gelehrten Verfahren nicht vorgesehen.

Es ist Aufgabe der Erfindung, eine Katalysatoranordnung für Abgasanlagen von Kraftfahrzeugen zu schaffen, welche einen geringen Platzbedarf erfordert, sowie bei motornahem Einbau einen strömungstechnisch günstigen Betrieb bei möglichst großer Lebensdauer der verwendeten Katalysator-Trägerkörper ermöglicht, wobei eine weitere Aufgabe darin besteht, eine Vorrichtung und ein Verfahren zu schaffen, durch welche bzw. durch welches entsprechende in der Katalysatoranordnung verwendete Katalysator-Trägerkörper herstellbar sind, insbesondere einfach und kostengünstig.

Die Aufgabe wird erfindungsgemäß mit einer Katalysatoranordnung für Abgasanlagen gemäß Anspruch 1 und einer Vorrichtung sowie einem Verfahren zur Herstellung eines Katalysator-Trägerkörpers gemäß Anspruch 11 bzw. Anspruch 18 gelöst.

Vorteilhafte Weiterbildungen sind in den jeweiligen abhängigen Ansprüchen definiert.

Die erfindungsgemäße Katalysatoranordnung für Abgasanlagen von Kraftfahrzeugen weist ein Gehäuse auf, und zumindest zwei Katalysator-Trägerkörper, welche im wesentlichen aufeinanderfolgend angeordnet sind und jeweils axial verlaufende Kanäle aufweisen. Die Katalysator-Trägerkörper sind in dem Gehäuse angeordnet. Erfindungsgemäß weist der erste Katalysator-Trägerkörper axiale Kanäle mit einer ersten durchschnittlichen Querschnittsfläche und zumindest zwei oder mehr parallel zu den axialen Kanälen verlaufende Durchlaßöffnungen auf, welche im Verhältnis zu den ersten Querschnittsflächen wesentlich größere zweite Querschnittsflächen aufweisen. Die Katalysator-Trägerkörper selbst bestehen vorzugsweise aus Metall und sind mit einem katalytisch aktiven Material beschichtet. Es ist jedoch auch möglich, sie direkt aus katalytisch aktivem Material herzustellen. Die Form des Gehäuses und der darin aufgenommenen Katalysator-Trägerkörper ist weitestgehend den Platzverhältnissen an der Einbaustelle anpassbar.

Die erfindungsgemäße Ausgestaltung der Katalysatoranordnung mit zumindest zwei Katalysator-Trägerkörpern, welche im wesentlichen aufeinanderfolgend angeordnet sind, bietet vor allem den Vorteil des geringeren Platzbedarfs einer solchen Anordnung, wobei gleichzeitig gute Strömungsverhältnisse geschaffen werden. Des weiteren ermöglichen die erfindungsgemäß vorgesehenen zumindest zwei oder mehr Durchlaßöffnungen des ersten Katalysatorträgerkörpers der Katalysatoranordnung, daß dort ein Teil der Abgase ungehindert hindurchströmen kann. Insbesondere bei Ausgestaltung des ersten Katalysator-Trägerkörpers als Startkatalysator ist dies von Vorteil. Auch muß so kein von Wicklungen freibleibender relativ großer Zentralbereich in dem als Startkatalysator ausgebildeten ersten Katalysator-Trägerkörper frei bleiben. Dies führt erfindungsgemäß zu vergleichmäßigten Strömungsverhältnissen im Bereich der direkt angeströmten Vorderseite des zweiten Katalysator-Trägerkörpers und reduziert so die schädigende Einwirkung der direkten Abgasströmung auf den zweiten Katalysator-Trägerkörper. Durch diese Maßnahme wird es erst möglich, den zweiten Katalysator-Trägerkörper platzsparend im wesentlichen aufeinanderfolgend zu dem ersten, insbesondere als Startkatalysator ausgebildeten Katalysator-Trägerkörper anzuordnen, da durch die angesprochene Änderung der Strömungsverhältnisse aufgrund der zumindest zwei Durchlaßöffnungen in dem ersten Katalysator-Trägerkörper eine Anströmung des zweiten Katalysator-Trägerkörpers mit heißen Abgasen im Dauerbetrieb weniger negativen Einfluß auf die direkt angeströmte Vorderseite des zweiten Katalysator-Trägerkörpers hat, als dies bei einer direkten Anströmung durch eine große zentrale Durchlaßöffnung der Fall ist.

Strömungstechnisch besonders vorteilhaft ist es, wenn die zweiten Querschnittsflächen der Durchlaßöffnungen des ersten Katalysator-Trägerkörpers jeweils um das 5- bis 20-fache, vorzugsweise um das 10- bis 15-fache größer sind als die ersten Querschnittsflächen der axial durch den bzw. die Katalysator-Trägerkörper verlaufenden Kanäle. Auf diese Weise ist eine besonders gute Durchströmung durch die Durchlaßöffnungen, insbesondere im Dauerbetrieb gewährleistet.

Besonders bevorzugt ist eine Ausführungsform der erfindungsgemäßen Katalysatoranordnung, bei welcher die Durchlaßöffnungen des ersten Katalysator-Trägerkörprers jeweils durch den geometrischen Mittelpunkt ihrer Querschnittsflächen verlaufende axiale Längsachsen aufweisen, welche nicht mit der durch den geometrischen Mittelpunkt des ersten Katalysator-Trägerkörpers verlaufenden Längsachse zusammenfallen.

Diese besonders bevorzugte außermittige Anordnung der Durchlaßöffnungen führt dazu, daß die Geschwindigkeit, mit der die Abgase durch die Durchlaßöffnungen hindurchtreten geringer ist als dies bei einer einzigen zentralen Durchlaßöffnung wie beim Stand der Technik der Fall ist. Der Grund dafür liegt in dem parabolischen Geschwindigkeitsprofil, welches sich in Röhren bei laminarer Strömung in Abhängigkeit des Radius ergibt. Das zugrundeliegende Modell ist in erster Näherung auch für die Strömung in einer im wesentlichen röhrenförmigen Katalysatoranordnung gültig. Die erfindungsgemäß durch die Anordnung der Durchlaßöffnungen verringerte Strömungsgeschwindigkeit der direkt durch die Durchlaßöffnungen strömenden heißen Abgase im Dauerbetrieb verringert die Schädigungsgefahr des dem ersten Katalysator-Trägerkörper nachgeordneten zweiten Katalysator-Trägerkörpers.

Erfindungsgemäß ist es somit möglich, zumindest den ersten Katalysator-Trägerkörper motomah einzubauen, insbesondere ist es bevorzugt, den ersten Katalysator-Trägerkörper im Endbereich des Krümmers einer Verbrennungskraftmaschine anzuordnen. Der erste Katalysator-Trägerkörper kann somit, insbesondere in der Kaltstartphase des Kraftfahrzeugs, seine Aufgabe als Startkatalysator besonders gut erfüllen.

Um die räumlichen Abmessungen der erfindungsgemäßen Katalysatoranordnung möglichst gering zu halten, sind die Katalysator-Trägerkörper unmittelbar aufeinanderfolgend angeordnet, wobei der Abstand abhängig von den räumlichen Gegebenheiten ist und bevorzugt in einem Bereich von 0,5 cm bis 10 cm liegt. Besonders bevorzugt ist ein Abstand von 2 cm bis 5 cm.

Als Gehäuse für die zumindest zwei Katalysator-Trägerkörper der erfindungsgemäßen Katalysatoranordnung ist bevorzugt ein in mehrere Gehäuseabschnitte unterteiltes Gehäuse vorgesehen, wobei die Gehäuseabschnitte über röhrenförmige Zwischenstücke miteinander verbunden sind und jeder Katalysator-Trägerkörper in einem jeweiligen Gehäuseabschnitt aufgenommen ist. Die Verbindung der Gehäuseabschnitte untereinander bzw. deren Verbindung zu den röhrenförmigen Zwischenstücken kann dabei auf vielfältige Art und Weise erfolgen, so etwa durch Schrauben, Verschweißen aber auch lösbar über die Verbindung durch flanschartige Abschnitte an den jeweiligen Abschnitten und Zwischenstücken, welche verschraubbar, verklemmbar o.ä. sind. Auch die Anordnung des Gehäuses als Ganzes im Abgasstrang von Kraftfahrzeugen kann auf die beschriebenen Arten erfolgen. Die Querschnitte der einzelnen Gehäuseabschnitte, sowie der verbindenden röhrenförmigen Zwischenstücke können den jeweiligen räumlichen Gegebenheiten angepaßt sein, bevorzugt weisen jedoch alle Gehäuseabschnitte und/oder Zwischenstücke einen einheitlichen Querschnitt auf. Allerdings kann der zweite Katalysator-Trägerkörper auch einen größeren Querschnitt haben als der erste.

In einer besonders bevorzugten Ausführungsform der erfindungsgemäßen Katalysatoranordnung ist das Gehäuse mit nur einem Gehäuseabschnitt ausgebildet, welcher die Katalysator-Trägerkörper aufnimmt. Das Gehäuse kann auf diese Art besonders kompakt gestaltet werden.

Zur Verbesserung der Stabilität, sowie um gute Strömungsverhältnisse auch bei eventuell einwirkenden mechanischen Belastungen, wie sie beispielsweise bei dem Einbau der Katalysator-Trägerkörper auftreten können, zu gewährleisten, weisen die Durchlaßöffnungen des ersten Katalysator-Trägerkörpers bevorzugt einen Rand auf, welcher verdickt ist und insbesondere aus einer Mehrzahl von aneinander liegenden Blechlagen besteht.

Besonders bevorzugt ist zumindest der erste Katalysatorträger, ein im wesentlich aus S-förmig oder aus evolventenförmig verschlungenen Blechlagen gebildeter Wabenkörper mit axial verlaufenden Kanälen.

Eine Vorrichtung zum Herstellen eines erfindungsgemäßen Katalysator-Trägerkörpers, insbesondere eines ersten Katalysator-Trägerkörpers der Katalysatoranordnung gemäß Anspruch 1, fertigt einen solchen Katalysator-Trägerkörper aus wenigstens einem Stapel, welcher aus einer Vielzahl von zumindest teilweise strukturierten Blechlagen besteht, die eine Vielzahl von für ein Fluid durchlässigen Kanälen bilden. Dabei weist die Vorrichtung eine um eine zentrale Achse verdrehbare, an jedem Stapel angreifende gabelartige Umschlingungseinrichtung auf, welche im wesentlichen von einer Form umgeben ist, wobei die Innenkontur der Form der Außenkontur des herzustellenden Katalysator-Trägerkörpers entspricht und wobei erfindungsgemäß aktive Wickeldorne an einem Träger der Umschlingungseinrichtung angeordnet sind, welche mit dem oder den Stapel(n) in Eingriff bringbar sind und zur Aufweitung der verschlungenen Stapel, insbesondere zur Bildung von Durchlaßöffnungen in dem Katalysator-Trägerkörper bewegbar sind.

Durch die bewegbaren Wickeldorne der Umschlingungseinrichtung ist es besonders einfach und somit kostengünstig möglich, Katalysator-Trägerkörper, insbesondere erste Katalysator-Trägerkörper, der Katalysatoranordnung gemäß Anspruch 1, welche bevorzugt im wesentlichen aus S-förmig oder aus evolventenförmig verschlungenen Blechlagen gebildet sind, herzustellen und mit den weiter oben beschriebenen Durchlaßöffnungen zu versehen.

In einer bevorzugten Ausführungsform der Vorrichtung weisen die aktiven Wickeldorne in axialer Richtung aufeinanderfolgend jeweils einen ersten Bereich mit möglichst kleinem Querschnitt und einen zweiten Bereich mit größeren Querschnitt sowie einen konischen Übergangsbereich auf, wobei die axiale Erstreckung des ersten sowie des zweiten Bereichs jeweils zumindest der axialen Erstreckung des herzustellenden Katalysator-Trägerkörpers entspricht und wobei der Querschnitt des zweiten Bereichs im wesentlichen dem gewünschten Querschnitt der jeweiligen Durchlaßöffnung entspricht.

Desweiteren sind bei dieser bevorzugten Ausführungsform der Vorrichtung zur Herstellung eines Katalysator-Trägerkörpers die aktiven Wickeldorne in axialer Richtung relativ zu den Stapeln, aus welchen durch Verschlingung eine Katalysator-Trägerkörper gebildet wird, bewegbar. Diese Bewegung kann dabei für alle aktiven Wickeldome einheitlich oder für jeden einzelnen aktiven Wickeldorn individuell erfolgen. Die Umschlingungsbewegung relativ zu der Form betrifft alle aktiven Wickeldorne.

Da die aktiven Wickeldorne bevorzugt so ausgebildet sind, daß durch einen einfachen Bewegungsablauf in axialer Richtung die Stapel in Eingriff bringbar sind und die verschlungenen Stapel in axialer Richtung aufweitbar sind, ist eine relativ einfache mechanische Konstruktion der aktiven Wickeldorne möglich, wodurch eine besonders kostengünstige Herstellung einer erfindungsgemäßen Vorrichtung und damit letztlich auch eines Katalysator-Trägerkörpers möglich ist. Hinzu kommt, daß die Aufweitung im konischen Übergangsbereich zwischen dem ersten Bereich und dem zweiten Bereich des jeweiligen aktiven Wickeldorns erfolgt, wodurch sich in sehr gleichmäßiger Weise die jeweilige Durchlaßöffnung in dem Katalysator-Trägerkörper ergibt, zumal der gewünschte Querschnitt der jeweiligen Durchlaßöffnung im wesentlichen durch den Querschnitt des zweiten Bereichs des jeweiligen aktiven Wickeldorns vorgegeben ist.

Besonders bevorzugt weist die eben angesprochene erste bevorzugte Ausführungsform der Vorrichtung zur Herstellung eines Katalysator-Trägerkörpers eine Grundplatte auf, welche die zu verschlingenden Stapel gegen die von den aktiven Wickeldornen aufgebrachte axiale Kraft abstützt, wobei Öffnungen im Bereich der jeweiligen aktiven Wickeldorne vorgesehen sind, durch welche die aktiven Wickeldorne beim Aufweiten der verschlungenen Stapel durchtreten.

Bei einer weiteren bevorzugten Ausführungsform der Vorrichtung zur Herstellung eines Katalysator-Trägerkörpers sind die aktiven Wickeldorne senkrecht zu ihrer jeweiligen Längsachse unter Beibehaltung ihrer axialen Orientierung relativ zu den Stapeln bewegbar. Dabei ist es besonders bevorzugt, wenn die aktiven Wickeldorne mit einer Amplitude bewegbar sind, welche dem gewünschten Durchmesser des Querschnitts der jeweiligen Durchlaßöffnung entspricht. Auch in dieser zweiten bevorzugten Ausführungsform dienen die aktiven Wickeldorne sowohl zum Eingriff mit den zu verschlingenden Stapeln, bzw. dem zu verschlingenden Stapel, als auch der Aufweitung zur Bildung der jeweiligen Durchlaßöffnungen in dem durch Verschlingung gebildeten Katalysator-Trägerkörper.

Die Bewegung der aktiven Wickeldorne gemäß der zweiten bevorzugten Ausführungsform der Vorrichtung zur Herstellung eines Katalysator-Trägerkörpers kann im wesentlichen durch eine kreisförmige Bewegung eines jeden der aktiven Wickeldorne erfolgen, wobei der Radius der Kreisbewegung bis zu der Amplitude zunimmt, welche dem jeweils gewünschten Durchmesser des Querschnitts der jeweiligen Durchlaßöffnung entspricht.

Vorzugsweise können die aktiven Wickeldorne der zweiten bevorzugten Ausführungsform der Vorrichtung einzeln bewegbar ausgeführt sein, es ist jedoch auch möglich, die aktiven Wickeldorne gemeinsam bewegbar auszuführen, indem etwa die gesamte Umschlingungseinrichtung entsprechend bewegbar ausgeführt wird.

Die zweite bevorzugte Ausfühuungsform der Vorrichtung zur Herstellung eines Katalysator-Trägerkörpers bietet den Vorteil einer geringen Bauhöhe.

Besonders bevorzugt ist es, wenn beide bevorzugte Ausführungsformen der Vorrichtung zur Herstellung eines Katalysator-Trägerkörpers so ausgestaltet werden, daß die Form und die Umschlingungseinrichtung zueinander verdrehbar sind. Femer kann die Form mehrteilig ausgebildet sein, und durch entsprechende Mechanismen klappbar sein.

Zur Herstellung eines Katalysator-Trägerkörpers, insbesondere eines ersten Katalysator-Trägerkörpers der Katalysatoranordnung gemäß Anspruch1, aus einer Vielzahl von zumindest teilweise strukturierten Blechlagen wird ein Verfahren vorgeschlagen, bei dem zumindest ein Stapel aus einer Mehrzahl von zumindest teilweise strukturierten Blechlagen geschichtet wird. Jeder Stapel wird im wesentlichen in eine der Außenformen des herzustellenden Katalysator-Trägerkörpers entsprechende Form eingebracht. Dabei wird jeder Stapel von einer im Zentralbereich der Form angeordneten Umschlingungseinrichtung gehalten. Alle Stapel werden durch relatives Verdrehen der Umschlingungseinrichtung gegen die Form zu einem Katalysator-Trägerkörper verschlungen, der die ganze Form ausfüllt. Erfindungsgemäß werden aktive Wickeldorne der Umschlingungseinrichtung so bewegt, daß die verschlungenen Stapel durch die Bewegung aufgeweitet werden, wodurch insbesondere Durchlaßöffnungen in die Katalysator-Trägerkörper eingebracht werden. Die Bewegung der aktiven Wickeldorne wurde bereits weiter oben erläutert.

Durch die beschriebene Verfahrensführung wird auf komplizierte Bewegungsabläufe verzichtet. Das Verfahren ist einfach und ohne weitere Schwierigkeiten durchführbar.

Vorteilhaft ist es, wenn jeder Stapel um jeweils eine Knicklinie gefaltet wird, wobei vorzugsweise jeweils ein aktiver Wickeldorn im Bereich jeder Knicklinie vorhanden ist.

Bei einer weiteren bevorzugten Ausführungsform wird/werden der oder die Stapel in eine offene Form mit zumindest zwei Formsegmenten eingebracht und die Form wird durch Verschwenken der Formsegmente gegen den Drehsinn der Umschlingungseinrichtung geschlossen, wenn ein vorgegebener Umschlingungsgrad erreicht ist. Es ist nicht zwingend, daß der Stapel vollständig um sich umschlungen ist. Der Schließvorgang der Form kann bereits dann eingeleitet werden, wenn die Erstreckung des noch nicht umschlungenen Abschnitts des Stapels kleiner oder gleich ist der Länge in Umfangsrichtung des Formsegmentes. Wird der Schließvorgang dann eingeleitet, so unterstützt ein jedes Segment den Umschlingungsvorgang, da die sich schließenden Segmente, die noch nicht umschlungenen Abschnitte zur Achse hin drücken.

Weitere Vorteile und Merkmale der erfindungsgemäßen Katalysatoranordnung und -vorrichtung, sowie des erfindungsgemäßen Verfahrens werden anhand der Zeichnung beschrieben.

Es zeigen:
Fig. 1 eine seitliche Schnittansicht einer bevorzugten Ausführungsform der erfindungsgemäßen Katalysatoranordnung;
Fig.2 eine Draufsicht auf einen ersten Katalysator-Trägerkörper einer bevorzugten Ausführungsform der erfindungsgemäßen Katalysatoranordnung;
Fig.3 eine seitliche Schnittansicht einer ersten bevorzugten Ausführungsform der erfindungsgemäßen Vorrichtung zur Herstellung eines Katalysator-Trägerkörpers; und
Fig.4 eine zweite bevorzugte Ausführungsform einer erfindungsgemäßen Vorrichtung zur Herstellung eines Katalysator-Trägerkörpers.

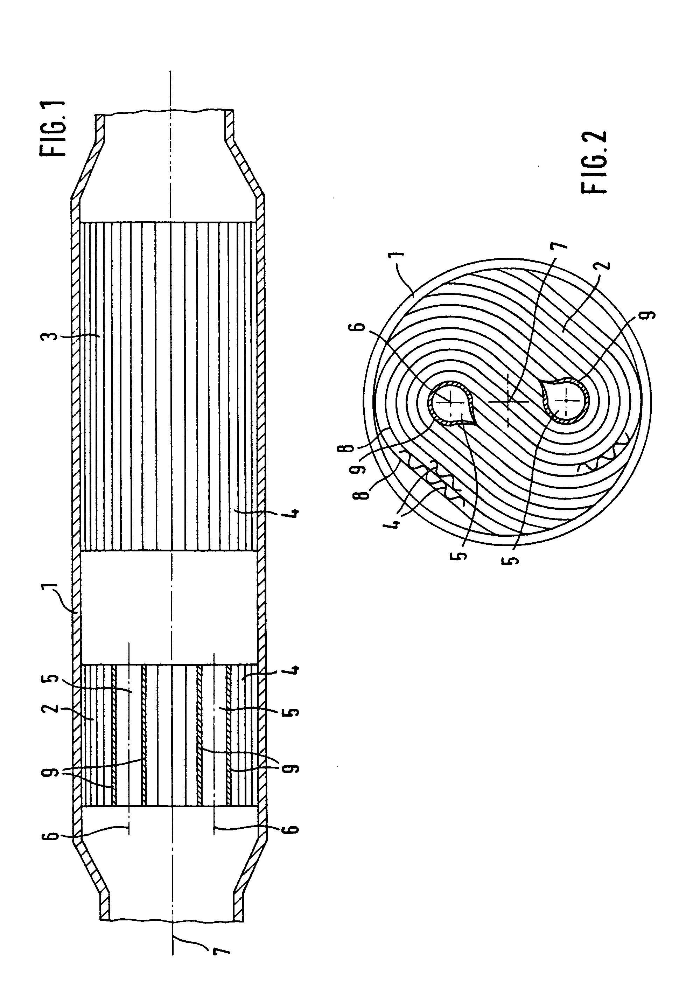

Fig.1 zeigt eine geschnittene Seitenansicht einer bevorzugten Ausführungsform der erfindungsgemäßen Katalysatoranordnung. In einem gemeinsamen Gehäuse 1 sind zwei Katalysator-Trägerkörper 2, 3 angeordnet. Sowohl der erste Katalysator-Trägerkörper 2, als auch der zweite Katalysator-Trägerkörper 3 weisen axial verlaufende Kanäle 4 auf und bilden einen Wabenkörper, wobei die Katalysator-Trägerkörper 2, 3 mit katalytisch aktivem Material (nicht gezeigt) beschichtet sind. Der erste Katalysator-Trägerkörper 2 ist als motornah einzubauender Startkatalysator ausgelegt. Er weist zwei parallel zu den axialen Kanälen 4 verlaufende Durchlaßöffnungen 5 auf. Diese weisen jeweils eine etwa 16-fach größere Querschnittsfläche auf als diejenige der axialen Kanäle. Die Durchlaßöffnungen 5 des ersten Katalysator-Trägerkörpers 2 weisen jeweils einen Rand 9 auf, welcher verdickt ist und aus einer Mehrzahl von aneinander liegenden gleich strukturierten Blechlagen besteht. Die Durchlaßöffnungen 5 weisen jeweils durch den geometrischen Mittelpunkt ihrer Querschnittsflächen verlaufende axiale Längsachsen 6 auf, welche nicht mit der durch den geometrischen Mittelpunkt des ersten Katalysator-Trägerkörpers verlaufenden Längsachse 7 zusammenfallen. Diese Längsachse 7 ist gleichzeitig auch die durch den geometrischen Mittelpunkt des zweiten Katalysator-Trägerkörpers 3 verlaufende Längsachse. Zur Anpassung an die Rohrdurchmesser der übrigen Abgasanlage weisen die Endabschnitte des Gehäuses 1 geringere Durchmesser auf als das Gehäuse 1 an sich.

Die Anordnung der Katalysator-Trägerkörper 2, 3 ist so, daß ihr jeweiliger Durchmesser im wesentlichen dem Innendurchmesser des röhrenförmigen Gehäuses 1 entspricht und sie somit in dem Gehäuse fixiert sind. Der Abstand zwischen dem ersten Katalysator-Trägerkörper 2 und dem zweiten Katalysator-Trägerkörper 3 beträgt wenige cm. Durch die außermittige Anordnung der Durchlaßöffnungen 5 im ersten Katalysator-Trägerkörper wird die Geschwindigkeit der durch die jeweiligen Durchlaßöffhungen 5 durchtretenden Abgase im Vergleich zu Abgasen, welche durch eine zentrale Öffnung durchtreten würden, verringert. Somit verringert sich auch die Beschädigungsgefahr im Bereich der direkt angeströmten Vorderseite des zweiten Katalysator-Trägerkörpers. Die beschriebenen Wabenkörper sind vorzugsweise aus zumindest teilweise strukturierten Blechlagen hergestellt, die durch Löten untereinander und mit dem Gehäuse verbunden sind.

Fig. 2 zeigt einen Querschnitt durch den ersten Katalysator-Trägerkörper 2 der bevorzugten Ausführungsform der Katalysatoranordnung von Fig. 1.

In dem Gehäuse 1 ist der erste Katalysator-Trägerkörper 2 angeordnet. Das Gehäuse 1 ist im wesentlichen rohrförmig ausgebildet. Der Katalysator-Trägerkörper 2 weist eine Vielzahl von im wesentlichen S-förmig verschlungenen Blechlagen auf, welche einen Wabenkörper mit axial verlaufenden Kanälen 4 bilden. Die Durchlaßöffnungen 5 des ersten Katalysator-Trägerkörpers 2 weisen jeweils einen Rand 9 auf, welcher verdickt ist und insbesondere aus einer Mehrzahl von aneinander liegenden Blechlagen 8 besteht. Die durch den geometrischen Mittelpunkt der jeweiligen Querschnittsflächen der Durchlaßöffnungen verlaufenden axialen Längsachsen 6 fallen nicht mit der durch den geometrischen Mittelpunkt des ersten Katalysator-Trägerkörpers 2 verlaufenden Längsachse 7 zusammen. Andere Ausgestaltungen des Katalysator-Trägerkörpers 2 sind möglich, insbesondere kann der Katalysator-Trägerkörper 2 auch aus evolventenförmig verschlungenen Blechlagen gebildet sein und es können mehrere Durchlaßöffnungen 5 vorgesehen sein.

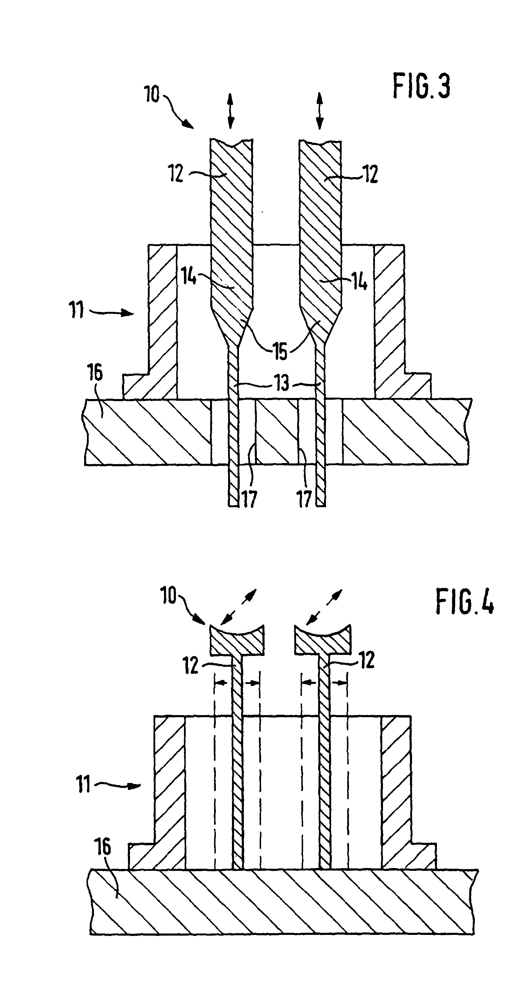

Fig.3 zeigt eine erste bevorzugte Ausführungsform einer Vorrichtung zur Hersellung eines Katalysator-Trägerkörpers gemäß der Erfindung.

Die Vorrichtung umfaßt eine Form 11 mit einem umlaufenden Außenflansch, die über nicht dargestellte Verbindungsmittel, wie z.B. Schrauben, mit einer Grundplatte 16 lösbar verbunden ist. In der Grundplatte 16 sind Öffnungen 17 ausgebildet, durch welche die Wickeldorne 12 der Umschlingungseinrichtung 10 durchtreten. Die jeweiligen Querschnitte der Öffnungen 17 entsprechen in etwa dem Querschnitt der jeweiligen zweiten Bereiche 14 der aktiven Wickeldorne 12. Die Höhe der Form 11 entspricht im wesentlichen der axialen Ausdehnung des ersten Katalysator-Trägerkörpers 2, welcher in der Vorrichtung durch relatives Drehen der Umschlingungseinrichtung 10 gegen die Form 11 um die Symmetrieachse der Vorrichtung (nicht gezeigt) aus in die Form 11 eingebrachten Stapeln, bzw. aus einem solchen Stapel, verschlungen wird. Dabei ist es gleichgültig, ob die Form 11 oder die Umschlingungseinrichtung 10 aktiv bewegt wird.

Die aktiven Wickeldorne 12 können einzeln oder gemeinsam parallel zu der Rotationsachse der Vorrichtung bewegt werden. Die Bewegungsrichtung entspricht der axialen Richtung des ersten Katalysator-Trägerkörpers 2. Insbesondere erfolgt die axiale Bewegung nach unten und die Aufweitung des ersten Katalysator-Trägerkörpers durch die konischen Übergangsbereiche 15 der jeweiligen aktiven Wickeldorne nachdem der Katalysator-Trägerkörper verschlungen wurde, wobei die ersten Bereiche 13 der jeweiligen aktiven Wickeldorne 12 mit den zu verschlingenden Stapeln, bzw. dem zu verschlingenden Stapel, in Eingriff standen. Gegebenenfalls kann an der Form 11 im oberen Bereich ein Anschlag vorgesehen sein, welcher verhindert, daß der Katalysator-Trägerkörper nach dem Aufweiten aufgrund verkanteter aktiver Wickeldorne 12 beim Zurückziehen der aktiven Wickeldorne 12 (nach oben) mitgezogen wird.

Fig. 4 zeigt eine zweite bevorzugte Ausführungsform der erfindungsgemäßen Vorrichtung zur Herstellung eines Katalysator-Trägerkörpers gemäß der Erfindung.

Die Vorrichtung der zweiten bevorzugten Ausführungsform entspricht im wesentlichen der Vorrichtung der Fig. 3. In diesem Fall sind jedoch keine Öffnungen in der Grundplatte 16 nötig, da die aktiven Wickeldorne 12 im wesentlichen keine axialen Kräfte auf den Katalysator-Trägerkörper aufbringen. Im Falle der Vorrichtung der Fig. 4 erfolgt die Aufweitung der verschlungenen Katalysator-Trägerkörper durch Bewegung der aktiven Wickeldorne 12 senkrecht zu ihrer jeweiligen Längsachse. Zwei Bewegungsebenen sind dabei durch die Pfeile in Fig. 4 angedeutet. Es versteht sich, daß die Bewegung selbstverständlich in alle azimutalen Winkelrichtungen erfolgt. Insbesondere kann die Bewegung durch eine kreisende Bewegung mit sich vergrößerndem Radius erfolgen, welche von den jeweiligen aktiven Wickeldornen 12 um ihre Längsachse ausgeführt wird. Die maximale Amplitude entspricht dabei dem gewünschten Durchmesser des Querschnitts der zu erzeugenden Durchlaßöffnung 5 in dem Katalysator-Trägerkörper. Eine solche Amplitude ist jeweils für beide dargestellten aktiven Wickeldorne 12 durch die gestrichelten Linien in Fig. 4 angedeutet.

Sowohl für die Vorrichtung nach Fig. 3, als auch für die Vorrichtung nach Fig. 4 gilt, daß der Querschnitt der aktiven Wickeldorne 12 im wesentlichen kreisförmig ist, prinzipiell sind jedoch auch andere Querschnitte, insbesondere tropfenförmige Querschnitte möglich.

### Bezugszeichenliste

- 1: Gehäuse
- 2,3: Katalysator-Trägerkörper
- 4: Kanäle
- 5: Durchlaßöffnungen
- 6: Längsachsen der Durchlaßöffnungen
- 7: Längsachse des Katalysator-Trägerkörpers
- 8: Blechlagen
- 9: Rand
- 10: Umschlingungseinrichtung
- 11: Form
- 12: aktive Wickeldorne
- 13: erster Bereich
- 14: zweiter Bereich
- 15: Übergangsbereich
- 16: Grundplatte
- 17: Öffnungen

## Patentansprüche

1. Katalysatoranordnung für Abgasanlagen von Kraftfahrzeugen mit einem Gehäuse (1) und zumindest zwei Katalysator-Trägerkörpern (2, 3), welche im wesentlichen aufeinanderfolgend angeordnet sind und jeweils axial verlaufende Kanäle (4) aufweisen, wobei der erste Katalysator-Trägerkörper (2) zumindest zwei oder mehr zu den axialen Kanälen (4) mit im wesentlichen vorgegebenen ersten durchschnittlichen Querschnittsflächen parallel verlaufende Durchlaßöffnungen (5) aufweist, welche im Verhältnis zu den ersten Querschnittsflächen wesentlich größere zweite Querschnittsflächen aufweisen
**Dadurch gekennzeichnet, daß** die Durchlaßöffnungen (5) zum Strömungsprofil des Abgases dezentral angeordnet sind, und daß im zentral augeströmten Bereich zwischen den Durchlaßöffnungen (5) kanäle (4) angeordnet sind.

2. Katalysatoranordnung nach Anspruch 1, **dadurch gekennzeichnet, daß** die zweiten Querschnittsflächen jeweils um das 5- bis 20-fache, vorzugsweise um das 10- bis 15-fache größer sind als die ersten Querschnittsflächen.

3. Katalysatoranordnung nach Anspruch 1 oder 2, **dadurch gekennzeichnet, daß** die Durchlaßöffnungen (5) jeweils durch den geometrischen Mittelpunkt ihrer Querschnittsflächen verlaufende axiale Längsachsen (6) aufweisen, welche nicht mit der durch den geometrischen Mittelpunkt des ersten Katalysator-Trägerkörpers (2) verlaufenden Längsachse (7) zusammenfallen.

4. Katalysatoranordnung nach einem der Ansprüche 1 bis 3, **dadurch gekennzeichnet, daß** der erste Kataysator-Trägerkörper (2) motornah eingebaut ist.

5. Katalysatoranordnung nach Anspruch 4, **dadurch gekennzeichnet, daß** der erste Katalysator-Trägerkörper (2) im Endbereich des Krümmers einer Verbrennungskraftmaschine angeordnet ist.

6. Katalysatoranordnung nach einem der Ansprüche 1 bis 5, **dadurch gekennzeichnet, daß** die Katalysator-Trägerkörper (2, 3) unmittelbar aufeinanderfolgend angeordnet sind, insbesondere in einem Abstand von 0,5 cm bis 10 cm, vorzugsweise in einem Abstand von 2 cm bis 5 cm.

7. Katalysatoranordnung nach einem der Ansprüche 1 bis 6, **dadurch gekennzeichnet, daß** das Gehäuse (1) in mehrere Gehäuseabschnitte unterteilt ist, welche über röhrenförmige Zwischenstücke miteinander verbunden sind, wobei jeder der Katalysator-Trägerkörper (2, 3) in einem jeweiligen Gehäuseabschnitt aufgenommen ist.

8. Katalysatoranordnung nach einem der Ansprüche 1 bis 6, **dadurch gekennzeichnet, daß** das Gehäuse (1) mit nur einem Gehäuseabschnitt ausgebildet ist, welcher die Katalysator-Trägerkörper (2, 3) aufnimmt.

9. Katalysatoranordnung nach einem der Ansprüche 1 bis 8, **dadurch gekennzeichnet, daß** zumindest der erste Katalysator-Trägerkörper (2) ein im wesentlichen aus S-förmig oder aus evolventenförmig verschlungenen Blechlagen (8) gebildeter Wabenkörper mit axial verlaufenden Kanälen (4) ist.

10. Katalysatoranordnung nach Anspruch 9, **dadurch gekennzeichnet, daß** die Durchlaßöffnungen (5) des ersten Katalysator-Trägerkörpers (2) jeweils einen Rand (9) aufweisen, welcher verdickt ist und insbesondere aus einer Mehrzahl von aneinanderliegenden Blechlagen (8) besteht.

11. Vorrichtung zur Herstellung eines Katalysator-Trägerkörpers, insbesondere eines ersten Katalysator-Trägerkörpers (2) der Katalysatoranordnung gemäß Anspruch 1, aus wenigstens einem Stapel aus einer Vielzahl von zumindest teilweise strukturierten Blechlagen (8), die eine Vielzahl von für ein Fluid durchlässigen Kanälen (4) bilden, wobei die Vorrichtung eine um eine zentrale Achse verdrehbare, an jedem Stapel angreifende gabelartige Umschlingungseinrichtung (10) aufweist, welche im wesentlichen von einer Form (11) umgeben ist, wobei die Innenkontur der Form (11) der Außenkontur des herzustellenden Katalysator-Trägerkörpers (2) entspricht und wobei aktive Wickeldorne (12) an einem Träger der Umschlingungseinrichtung (10) angeordnet sind, welche mit dem oder den Stapel(n) in Eingriff bringbar sind und zur Aufweitung der verschlungenen Stapel, insbesondere zur Bildung von Durchlaßöffnungen (5), in dem Katalysator-Trägerkörper (2) bewegbar sind.

12. Vorrichtung nach Anspruch 11, **dadurch gekennzeichnet, daß** die aktiven Wickeldorne (12) in axialer Richtung aufeinanderfolgend jeweils einen ersten Bereich (13) mit möglichst kleinem Querschnitt und einen zweiten Bereich (14) mit größerem Querschnitt, sowie einen konischen Übergangsbereich (15) aufweisen, wobei die axiale Erstreckung des ersten (13) sowie des zweiten (14) Bereichs jeweils zumindest der axialen Erstreckung des Katalysator-Trägerkörpers (2) entspricht und wobei der Querschnitt des zweiten Bereichs (14) im wesentlichen dem gewünschten Querschnitt der jeweiligen Durchlaßöffnung (5) entspricht.

13. Vorrichtung nach Anspruch 12, **dadurch gekennzeichnet, daß** die aktiven Wickeldorne (12) in axialer Richtung relativ zu den Stapeln bewegbar sind.

14. Vorrichtung nach einem der Ansprüche 11 bis 13, **dadurch gekennzeichnet, daß** die Vorrichtung eine Grundplatte (16) aufweist, welche die Stapel gegen die von den aktiven Wickeldornen (12) aufgebrachte axiale Kraft abstützt und welche Öffnungen (17) im Bereich der jeweiligen aktiven Wickeldorne (12) aufweist, durch welche die aktiven Wickeldorne (12) durchtreten.

15. Vorrichtung nach Anspruch 11, **dadurch gekennzeichnet, daß** die aktiven Wickeldorne (12) senkrecht zu ihrer jeweiligen Längsachse unter Beibehaltung ihrer axialen Orientierung relativ zu den Stapeln bewegbar sind.

16. Vorrichtung nach Anspruch 15, **dadurch gekennzeichnet, daß** die aktiven Wickeldorne (12) mit einer Amplitude bewegbar sind, welche dem gewünschten Durchmesser des Querschnitts der jeweiligen Durchlaßöffnung (5) entspricht.

17. Vorrichtung nach einem der Ansprüche 11 bis 16, **dadurch gekennzeichnet, daß** die Form (11) und die Umschlingungseinrichtung (10) relativ zueinander verdrehbar sind.

18. Verfahren zur Herstellung eines Katalysator-Trägerkörpers, insbesondere eines ersten Katalysator-Trägerkörpers (2) der Katalysatoranordnung gemäß Anspruch 1, aus einer Vielzahl von zumindest teilweise strukturierten Blechlagen (8), bei dem
- mindestens ein Stapel aus einer Mehrzahl von zumindest teilweise strukturierten Blechlagen (8) geschichtet wird,
- jeder Stapel im wesentlichen in eine der Außenform des herzustellenden Katalysator-Trägerkörpers (2) entsprechenden Form (11) eingebracht wird,
- wobei jeder Stapel von einer im Zentralbereich der Form (11) angeordneten Umschlingungseinrichtung (10) gehalten wird,
- wobei alle Stapel durch relatives Drehen der Umschlingungseinrichtung (10) gegen die Form (11) zu einem Katalysator-Trägerkörper (2) verschlungen werden, der die ganze Form (11) ausfüllt, und
- aktive Wickeldorne (12) der Umschlingungseinrichtung (10) so bewegt werden, daß die verschlungenen Stapel durch diese Bewegung aufgeweitet werden, wodurch insbesondere Durchlaßöffnungen (5) in die Katalysator-Trägerkörper (2) eingebracht werden.

19. Verfahren nach Anspruch 18, **dadurch gekennzeichnet, daß** jeder Stapel um jeweils eine Knicklinie gefaltet wird, wobei vorzugsweise jeweils ein aktiver Wickeldorn (12) im Bereich jeder Knicklinie vorhanden ist.

20. Verfahren nach Anspruch 18 oder 19, **dadurch gekennzeichnet, daß** der oder die Stapel in eine offene Form (11) mit zumindest zwei Formsegmenten eingebracht wird/werden und die Form (11) durch Verschwenken der Formsegmente gegen den Drehsinn der Umschlingungseinrichtung (10) geschlossen wird, wenn ein vorgegebener Umschlingungsgrad erreicht ist.

## Claims

1. Catalytic converter arrangement for exhaust gas systems of automotive vehicles with a housing (1) and at least two catalyst carrier bodies (2, 3), which are arranged substantially following one another, and each are provided with axial channels (4), wherein the first catalyst carrier body (2) is provided with at least two or more flow-through apertures (5) with first substantially pre-determined cross-sectional areas, running parallel to the axial channels (4), which have second cross-sectional areas being substantially larger relative to the first cross-sectional areas, **characterized in that** the flow-through apertures (5) are arranged decentrally with respect to the flow profile of the exhaust gas and that channels (4) are arranged in the centrally flown-against region between the flow-through apertures (5).

2. Catalytic converter arrangement according to claim 1, **characterised in that** the second cross-sectional areas are respectively larger by 5 to 20 times, preferably by 10 to 15 times, than the first cross-sectional areas.

3. Catalytic converter arrangement according to claim 1 or 2, **characterised in that** the flow-through apertures (5) have longitudinal axes (6) running respectively through the geometrical centre point of their cross-sectional areas, which axes do not coincide with the longitudinal axis (7) running though the geometrical centre point of the first catalyst carrier body (2).

4. Catalytic converter arrangement according to one of claims 1 to 3, **characterised in that** the first catalyst carrier body (2) is installed close to the engine.

5. Catalytic converter arrangement according to claim 4, **characterised in that** the first catalyst carrier body (2) is arranged in the end area of the manifold of an internal combustion engine.

6. Catalytic converter arrangement according to one of claims 1 to 5, **characterised in that** the catalyst carrier bodies (2, 3) are arranged directly following one another, in particular at a distance apart of 0.5 cm to 10 cm, preferably at a distance apart of 2 cm to 5 cm.

7. Catalytic converter arrangement according to one of claims 1 to 6, **characterised in that** the housing (1) is divided into several housing sections, which are joined to one another by means of tubular connecting pieces, wherein each of the catalyst carrier bodies (2, 3) is received into a respective housing section.

8. Catalytic converter arrangement according to one of claims 1 to 6, **characterised in that** the housing (1) has only one housing section, which receives the catalyst carrier body (2, 3).

9. Catalytic converter arrangement according to one of claims 1 to 8, **characterised in that** at least the first catalyst carrier body (2) is a honeycomb body formed substantially from metal sheets (8) twisted in an S-shape or involute shape, with channels (4) running axially.

10. Catalytic converter arrangement according to claim 9, **characterised in that** the flow-through apertures (5) of the first catalyst carrier body (2) each have an edge (9) which is thickened, and in particular is composed of a plurality of metal sheets (8) abutting one another.

11. Device for manufacturing a catalyst carrier body, in particular a first catalyst carrier body (2) of the catalytic converter arrangement according to claim 1, from at least one stack of a plurality of, at least partly structured metal sheets (8) which form a plurality of channels (4) through which a fluid can flow, wherein the device is provided with a fork-like twisting means (10) being rotatable about a central axis and engaging with each stack, which means is substantially surrounded by a mould (11), wherein the internal contour of the mould (11) corresponds to the external contour of the catalyst carrier body (2) to be manufactured, and wherein active winding spindles (12) are arranged on a carrier of the twisting means (10), which spindles can be brought into engagement with the stack or stacks, and are movable for expanding the twisted stack, in particular for forming flow-through apertures (5) within the catalyst carrier body (2).

12. Device according to claim 11, **characterised in that** the active winding spindles (12) are provided sequentially in the axial direction respectively with a first area (13) with a cross-section being as small as possible, and a second area (14) with a larger cross-section, and a conical transition area (15), wherein the axial extent of the first area (13) as well as of the second area (14) respectively corresponds at least to the axial extent of the catalyst carrier body (2), and wherein the cross-section of the second area (14) substantially corresponds to the desired cross-section of the respective flow-through aperture (5).

13. Device according to claim 12, **characterised in that** the active winding spindles (12) are movable in the axial direction relative to the stacks.

14. Device according to one of claims 11 to 13, **characterised in that** the device is provided with a base plate (16) which supports the stacks against the axial force applied by the active winding spindles (12), and which is provided with apertures (17) in the area of the respective active winding spindles (12), through which the active winding spindles (12) pass.

15. Device according to claim 11, **characterised in that** the active winding spindles (12) are movable perpendicular to their respective longitudinal axis, while maintaining their axial orientation relative to the stacks.

16. Device according to claim 15, **characterised in that** the active winding spindles (12) are movable at an amplitude which corresponds to the desired diameter of the cross-section of the respective flow-through aperture (5).

17. Device according to one of claims 11 to 16, **characterised in that** the mould (11) and the twisting means (10) are rotatable relative to one another.

18. Method for manufacturing a catalyst carrier body, in particular a first catalyst carrier body (2) of the catalytic converter arrangement according to claim 1, from a plurality of, at least partly structured metal sheets (8), in which
- at least one stack of a plurality of, at least partly structured metal sheets (8) is layered up,
- each stack is inserted into a mould (11) substantially corresponding to the external shape of the catalyst carrier body (2) to be manufactured,
- wherein each stack is held by a twisting means (10) arranged in the central area of the mould (11),
- wherein all stacks are twisted, by a relative rotation of the twisting means (10) against the mould (11), into a catalyst carrier body (2) which fills the whole mould (11), and
- active winding spindles (12) of the twisting means (10) are moved such that the twisted stacks are expanded by this movement, whereby in particular flow-through apertures (5) are introduced into the catalyst carrier body (2).

19. Method according to claim 18, **characterised in that** each stack is folded respectively about a fold line, wherein preferably an active winding spindle (12) is respectively present in the area of each fold line.

20. Method according to claim 18 or 19, **characterised in that** the stack or stacks is/are introduced into an open mould (11) with at least two mould segments, and the mould (11) is closed by pivoting the mould segments counter to the direction of rotation of the twisting means (10), when a pre-determined degree of twisting is reached.

## Revendications

1. Ensemble de catalyseur pour des installations de gaz d'échappement de véhicules automobiles, comportant un carter (1) et au moins deux corps support de catalyseur (2, 3), qui sont agencés sensiblement de manière successive et qui présentent des canaux (4) s'étendant respectivement de manière axiale, le premier corps support de catalyseur (2) présentant au moins deux ou plus de deux ouvertures de passage (5) avec des premières aires moyennes en section transversale sensiblement prédéterminées, s'étendant parallèlement aux canaux axiaux (4), lesquelles ouvertures de passage (5) ont des deuxièmes aires en section transversale sensiblement plus grandes par rapport aux premières aires en section transversale, **caractérisé en ce que** les ouvertures de passage (5) sont agencées de manière décentralisée par rapport au profil d'écoulement du gaz d'échappement et **en ce que** des canaux (4) sont agencés dans la zone affluée centralement entre les ouvertures de passage (5).

2. Ensemble de catalyseur selon la revendication 1, **caractérisé en ce que** les deuxièmes aires en section transversale sont respectivement 5 à 20 fois plus grandes, de préférence 10 à 15 fois plus grandes que les premières aires en section transversale.

3. Ensemble de catalyseur selon la revendication 1 ou 2, **caractérisé en ce que** les ouvertures de passage (5) présentent des axes longitudinaux axiaux (6) s'étendant respectivement à travers le centre géométrique de leurs aires en section transversale, lesquels axes (6) ne coïncident pas avec l'axe longitudinal (7) s'étendant à travers le centre géométrique du premier corps support de catalyseur (2).

4. Ensemble de catalyseur selon l'une des revendications 1 à 3, **caractérisé en ce que** le premier corps support de catalyseur (2) est monté à proximité du moteur.

5. Ensemble de catalyseur selon la revendication 4, **caractérisé en ce que** le premier corps support de catalyseur (2) est agencé dans la zone d'extrémité du collecteur d'une machine à combustion interne.

6. Ensemble de catalyseur selon l'une des revendications 1 à 5, **caractérisé en ce que** les corps support de catalyseur (2, 3) sont agencés de manière à se succéder directement, notamment à une distance de 0,5 cm à 10 cm, de préférence à une distance de 2 cm à 5 cm.

7. Ensemble de catalyseur selon l'une des revendications 1 à 6, **caractérisé en ce que** le carter (1) est subdivisé en plusieurs sections de carter, qui sont reliées les unes aux autres par des pièces intermédiaires tubulaires, chacun des corps support de catalyseur (2, 3) étant reçu dans une section de carter respective.

8. Ensemble de catalyseur selon l'une des revendications 1 à 6, **caractérisé en ce que** le carter (1) n'est réalisé qu'avec une section de carter qui reçoit le corps support de catalyseur (2, 3).

9. Ensemble de catalyseur selon l'une des revendications 1 à 8, **caractérisé en ce qu'**au moins le premier corps support de catalyseur (2) est un corps en nids d'abeilles qui est formé de couches de tôles (8) entre-enroulées en forme de S ou en forme de développante et qui comporte des canaux (4) s'étendant de manière axiale.

10. Ensemble de catalyseur selon la revendication 9, **caractérisé en ce que** les ouvertures de passage (5) du premier corps support de catalyseur (2) présentent chacune un bord (9) qui est épaissi et qui est constitué notamment d'une pluralité de couches de tôles (8) disposées attenantes les unes aux autres.

11. Dispositif destiné à la fabrication d'un corps support de catalyseur, notamment d'un premier corps support de catalyseur (2) de l'ensemble de catalyseur selon la revendication 1, à partir d'au moins une pile d'une multiplicité de couches de tôles (8) au moins partiellement structurées, qui forment une multiplicité de canaux (4) pouvant être parcourus par un fluide, dans quel cas le dispositif présente un moyen d'entre-enroulement (10) à la façon d'une fourchette, rotatif autour d'un axe central et s'engageant avec chaque pile, lequel moyen d'entre-enroulement (10) est sensiblement entouré d'un moule (11), le contour intérieur du moule (11) correspondant au contour extérieur du corps support de catalyseur (2) devant être fabriqué et des mandrins d'enroulement actifs (12) étant agencés sur un support du moyen d'entre-entroulement (10) qui peuvent être amenés à s'engager avec la ou les pile(s) et qui sont déplaçables pour l'élargissement des piles entre-enroulées, notamment pour la formation d'ouvertures de passage (5) dans le corps support de catalyseur (2).

12. Dispositif selon la revendication 11, **caractérisé en ce que** les mandrins d'enroulement actifs (12) présentent en direction axiale successivement respectivement une première zone (13) avec une section transversale aussi petite que possible et une deuxième zone (14) avec une section transversale plus grande ainsi qu'une zone de transition conique (15), dans quel cas l'étendue axiale de la première (13) ainsi que de la deuxième (14) zone correspond respectivement au moins à l'étendue axiale du corps support de catalyseur (2) et dans quel cas la section transversale de la deuxième zone (14) correspond sensiblement à la section transversale de l'ouverture de passage (5) respective.

13. Dispositif selon la revendication 12, **caractérisé en ce que** les mandrins d'enroulement actifs (12) sont déplaçables en direction axiale relativement aux piles.

14. Dispositif selon l'une des revendications 11 à 13, **caractérisé en ce que** le dispositif a une plaque de base (16) qui supporte les piles contre la force axiale exercée par les mandrins d'enroulement actifs (12) et qui a des ouvertures (17) dans la zone des mandrins d'enroulement actifs (12) respectifs, à travers lesquelles passent les mandrins d'enroulement actifs (12).

15. Dispositif selon la revendication 11, **caractérisé en ce que** les mandrins d'enroulement actifs (12) sont déplaçables perpendiculairement par rapport a leur axe longitudinal respectif tout en maintenant leur orientation axiale relative par rapport aux piles.

16. Dispositif selon la revendication 15, **caractérisé en ce que** les mandrins d'enroulement actifs (12) sont déplaçables avec une amplitude qui correspond au diamètre désiré de la section transversale de l'ouverture de passage (5) respective.

17. Dispositif selon l'une des revendications 11 à 16, **caractérisé en ce que** le moule (11) et le moyen d'entre-entroulement (10) peuvent être tournés relativement l'un à l'autre.

18. Procédé destiné à la fabrication d'un corps support de catalyseur, notamment d'un premier corps support de catalyseur (2) de l'ensemble de catalyseur selon la revendication 1, d'une multiplicité de couches de tôles (8) au moins partiellement structurées, dans le cas duquel
- au moins une pile d'une pluralité de couches de tôles (8) au moins partiellement structurées est empilée,
- chaque pile est introduite sensiblement dans un moule (11) correspondant à la forme extérieure du corps support de catalyseur (2) devant être fabriqué,
- chaque pile étant retenue par un moyen d'entre-enroulement (10) agencé dans la zone centrale du moule (11),
- toutes les piles étant entre-enroulées par la rotation relative du moyen d'entre-enroulement (10) contre le moule (11) en un corps support de catalyseur (2) qui remplit tout le moule (11) et
- des mandrins d'enroulement actifs (12) du moyen d'entre-enroulement (10) sont déplacés de telle manière que les piles entre-enroulées sont élargies par ce mouvement, par quel moyen notamment des ouvertures de passage (5) sont introduites dans les corps support de catalyseur (2).

19. Procédé selon la revendication 18, **caractérisé en ce que** chaque pile est pliée autour de respectivement une ligne de pliage, dans quel cas un mandrin d'enroulement actif (12) se trouve respectivement de préférence dans la zone de chaque ligne de pliage.

20. Procédé selon la revendication 18 ou 19, **caractérisé en ce que** la pile ou les piles est/sont introduite(s) dans un moule ouvert (11) avec au moins deux segments de moule et que le moule (11) est fermé par le pivotement des segments de moule contre le sens de rotation du moyen d'entre-enroulement (10) lorsqu'un degré prédéterminé d'entre-enroulement est atteint.
